# EUROPÄISCHE PATENTSCHRIFT

(11) **EP 0 827 467 B1**
(45) Veröffentlichungstag und Bekanntmachung des Hinweises auf die Patenterteilung: **30.12.1998**
(21) Anmeldenummer: 96909060.4
(22) Anmeldetag: 17.04.1996
(51) Int. Cl.: B60S 1/08

(54) **VORRICHTUNG ZUM BETREIBEN EINES SCHEIBENWISCHERS**
DEVICE FOR OPERATING A WINDSCREEN WIPER
DISPOSITIF POUR ACTIONNER UN ESSUIE-GLACE

(30) Priorität: 27.05.1995 DE 19519501
(43) Veröffentlichungstag der Anmeldung: 11.03.1998
(73) Patentinhaber: ROBERT BOSCH GMBH, 70442 Stuttgart (DE)
(72) Erfinder: PIENTKA, Rainer, D-77855 Achern (DE); BLITZKE, Henry, D-77815 Bühl (DE); BÜRKLE, Jörg, D-77654 Offenburg (DE)
(86) Internationale Anmeldenummer: DE9600673
(87) Internationale Veröffentlichungsnummer: WO9637390

(56) Entgegenhaltungen:
- WO-A-83/02093
- DE-A- 4 339 573
- DE-A- 4 339 575
- DE-U- 9 309 837
- US-A- 4 916 374

## Beschreibung

### Stand der Technik

Die Erfindung bezieht sich auf eine Vorrichtung zum Betreiben eines Scheibenwi schers mit einer Sensoreinrichtung zum Erfassen des Benetzungszustands einer Scheibe, einer das Sensorsignal aufnehmenden Auswerteeinrichtung,in der eine Einstelleinrichtung zum Erzeugen eines Referenzwerts vorgesehen ist, und einer Ansteuereinheit für den Scheibenwischer, die von der Auswerteeinrichtung zum Erzeugen eines Wischvorganges angesteuert wird, wenn die Differenz zwischen dem Referenzwert und einem aktuellen Meßwert einen vorgegebenen Schwellwert überschreitet.

Eine derartige Vorrichtung ist in der DE 33 14 770 A1 als bekannt ausgewiesen. Bei dieser bekannten Vorrichtung wird ein Referenzwert nach einem anfänglichen Wischvorgang auf den Maximalwert des Sensorsignals eingestellt und kann bei Verringerung des Sensorsignals infolge von Verschmutzungen oder Trübungen der Scheibe, die nicht mit dem Wischer beseitigt werden können, in der Größenordnung einiger Minuten der herabgesetzten Signalamplitude nach geführt werden. Es hat sich jedoch gezeigt, daß eine derartige Nachführung Einflüsse nicht genügend berücksichtigt, die auf mit dem Wischer beseitigbare Benetzungen bzw.Verschmutzungen der Scheibe zurückzuführen sind.

Ähnliche Schwierigkeiten ergeben sich auch bei der in der DE 41 12 847 A1 offenbarten Vorrichtung, bei der es darum geht, den Ruhepegel eines Sensorsignals an eine Langzeitdrift, eine Temperaturdrift und/oder an konstruktive Gegebenheiten im Bereich der Sensoreinrichtung anzupassen.

### Vorteile der Erfindung

Der Erfindung liegt die Aufgabe zugrunde, eine Vorrichtung der eingangs genannten Art so weiterzubilden, daß Ereignisse, die einen Wischvorgang auslösen sollen, besser erkannt werden.

Diese Aufgabe wird mit den im Anspruch 1 angegebenen Merkmalen gelöst.

Hiernach ist also vorgesehen, daß die Einstelleinrichtung mindestens eine Einstellstufe aufweist, die eine Zeitkonstante in der Größenordnung von einer Sekunde bis einige Sekunden besitzt, und daß der Referenzwert schrittweise unter Berücksichtigung von allen im Abstand von Bruchteilen einer Sekunde aufgenommenen aktuellen Meßwerten nachführbar ist. Hierdurch wird der Referenzwert, gegenüber dem die Differenz des aktuellen Meßwerts festgestellt wird, um bei Überschreitung eines vorgegebenen Schwellwerts den Wischbetrieb auszulösen, dem Sensorsignal beispielsweise bei einem langsamen Zuwachsen der Scheibe infolge feiner Regentropfen so nachgeführt, daß die Art des einen eventuellen Wischbetrieb auslösenden Ereignisses besser detektierbar und analysierbar ist als bei bisherigen Vorrichtungen dieser Art und ein optimal darauf abgestimmter Wischbetrieb gewählt werden kann.

Eine gute Anpassung des Wischbetriebs an die äußeren Bedingungen wird dadurch erzielt, daß die eine Zeitkonstante zwischen einer Sekunde und sechs Sekunden wählbar ist und daß die aktuellen Meßwerte im Abstand von einigen Millisekunden aufgenommen werden.

Zum sicheren Erfassen der aktuellen Meßwerte der Sensoreinrichtung und eine einfache, z.B. durch entsprechende Programmierung, wählbare Einstellung des Referenzwerts wird dadurch ermöglicht, daß der Referenzwert nach Ablauf der der einen Zeitkonstante entsprechenden Zeit um ein Inkrement in Richtung auf einen in einer vorangehenden ersten Einstellstufe erzeugten Bezugswert aktualisiert wird, daß die erste Einstellstufe eine erste Zeitkonstante besitzt, die einen Bruchteil der einen Zeitkonstante beträgt, und daß der Bezugswert in der ersten Zeitkonstante entsprechenden Zeitabständen bei Abweichung in Richtung auf den dann vorliegenden aktuellen Meßwert um ein Inkrement verändert wird.

Ein einfacher Aufbau der Vorrichtung ist derart, daß die erste Einstellstufe eine erste Vergleichereinrichtung zum Vergleichen des aktuellen Meßwertes und des vorhandenen Bezugswerts aufweist und daß die eine Einstellstufe eine zweite Vergleichereinrichtung besitzt zum Vergleichen des Bezugswerts, der nach Ablauf der der einen Zeitkonstanten entsprechenden Zeit vorliegt, mit dem dann anstehenden Referenzwert der einen Einstellstufe. Mit diesen Maßnahmen wird ein zweistufiger Aufbau erhalten, der eine gute Möglichkeit bietet, die Zeitkonstanten der beiden Einstellstufen geeignet vorzugeben. Im einzelnen ist dabei der Aufbau beispielsweise derart, daß die vorangehende erste Einstellstufe ein erstes Zwischenregister und die eine Einstellstufe ein zweites Zwischenregister aufweist, in dem der Bezugswert bzw. der Referenzwert ablegbar sind.

Mit der Maßnahmen, daß eine Zähleinrichtung vorgesehen ist, mit der innerhalb eines vorgebbaren Zählzyklus die Aktualisierungsereignisse des Bezugswertes in der ersten Einstellstufe gezählt werden, und daß nach Ablauf des Zählzyklus oder nach Ablauf einer vorgebbaren Anzahl von Zählzyklen der dann in der ersten Einstellstufe vorliegende Bezugswert der einen Einstellstufe zum Bilden des Referenzwerts zugeführt wird, kann die Zeitkonstante der einen (nachfolgenden) Einstellstufe durch Verkürzen oder Verlängern des Zählzyklus in einfacher Weise geändert werden.

Eine vorteilhafte Möglichkeit, typischen Verläufen des Sensorsignals Rechnung zu tragen, um den Wischerbetrieb zu optimieren, besteht darin, daß mittels der Auswerteeinrichtung positive und negative Verläufe des Sensorsignals unterscheidbar sind und daß bei positivem Verlauf die Aktualisierung des Referenzwertes mit einer kleineren Zeitkonstante und bei negativem Verlauf mit einer größeren Zeitkonstante durchführbar ist. Eine weitere Verbesserung der Anpassung an gegebene Verhältnisse ergibt sich dabei dadurch, daß die Zeitkonstante bei negativem Verlauf des Sensorsignals bis zu einigen Minuten nach dem Start des Wischbetriebs kürzer und danach länger gewählt ist.

Eine günstige Maßnahme, zum Wählen der kurzen Zeitkonstante bei positivem Verlauf des Sensorsignals besteht darin, daß die kleinere Zeitkonstante der ersten Zeitkonstante entspricht und daß der Bezugswert als Referenzwert für die Bildung der Differenz zum eventuellen Auslösen des Wischvorgangs zugrunde gelegt wird.

Eine weitere Möglichkeit zum Optimieren des Wischbetriebs ergibt eine Ausgestaltung derart, daß der Differenz-Schwellwert zum Auslösen eines Wischvorganges einem vorgegebenen Bruchteil des Referenzwertes entspricht, wenn der Referenzwert einen vorgegebenen Wert nicht überschreitet und daß der Schwellwert auf eine feste Anzahl von Inkrementen eingestellt ist, wenn der Referenzwert den vorgegebenen Wert überschreitet.

Die Erfindung wird nachfolgend anhand eines Ausführungsbeispiels unter Bezugnahme auf die Zeichnungen näher erläutert. Es zeigen:
- Fig. 1: ein schematisches Blockschaltbild einer Vorrichtung zum Betreiben eines Scheibenwischers und
- Fig. 2: einen Abschnitt der Auswerteeinrichtung ebenfalls in Blockdarstellung.

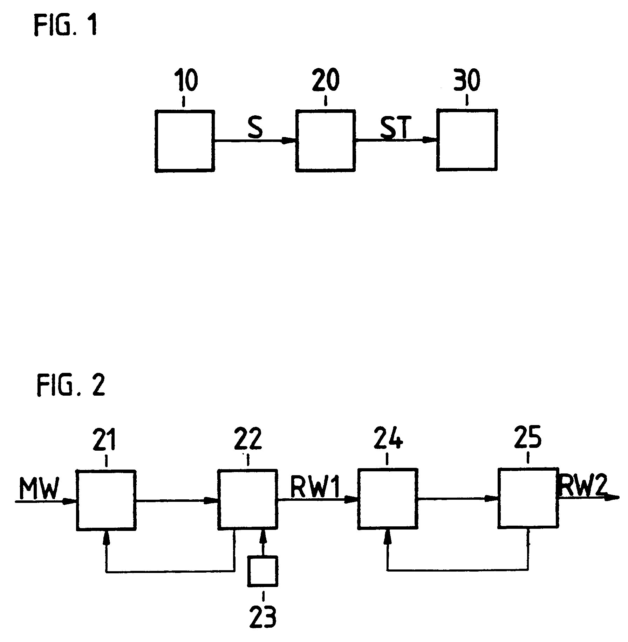

Die Figur 1 zeigt eine Sensoreinrichtung 10, die ein Sensorsignal S an eine Auswerteeinrichtung 20 abgibt. Die Auswerteeinrichtung 20 führt einer Ansteuereinheit 30 ein Steuersignal ST zu, falls auf einer nicht gezeigten Scheibe ein das Sensorsignal S beeinflussendes Ereignis auftritt, das die Auslösung des Wischbebtriebs erforderlich macht.

Die Sensoreinrichtung 10 ist zum Beispiel ein optischer Sensor, wie er in dem eingangs genannten Stand der Technik angegeben ist. Die Sensoreinrichtung 10 liefert als Sensorsignal S ein aufbereitetes Signal, auf dessen Grundlage die Auswerteeinrichtung 20 die Art einer Benetzung bzw. Verschmutzung der Scheibe analysieren und das Steuersignal ST geeignet ausbilden kann, um einen optimalen Wischbetrieb über die Ansteuereinheit 30 zu erzeugen. Der Wischbetrieb kann dabei beispielsweise in einer Direktauslösung eines Wischvorgangs bestehen, der bei jedem ähnlichen Ereignis in entsprechender Weise ausgelöst wird. Weiterhin kann der Wischbetrieb in einem Intervallbetrieb mit variablen Intervallzeiten oder in einem Dauerbetrieb verschiedener Stufen bestehen.

In Figur 2 ist ein Abschnitt der Auswerteeinrichtung näher dargestellt, mit dem eine verfeinerte Analyse eines das Sensorsignal S beeinflussenden Ereignisses möglich ist und erforderlichenfalls ein geeigneter Wischbetrieb über ein entsprechendes Steuersignal ST ausgelöst werden kann. Die Schaltung zeigt eine erste Einstellstufe mit einer ersten Vergleichereinrichtung 21, einem ersten Zwischenregister 22 und einer Zähleinrichtung 23. An diese Einstellstufe ist eine weitere Einstellstufe mit einer zweiten Vergleichereinrichtung 24 und einem zweiten Zwischenregister 25 angeschlossen.

Der ersten Vergleichereinrichtung 21 wird ein aktueller Meßwert MW aus dem Sensorsignal S einerseits und ein Bezugswert, der in dem ersten Zwischenregister 22 abgelegt ist, in kurzen Zeitabständen in der Größenordnung von Millisekunden, z.B. 5 ms, zugeführt. Diese Zeitabstände ergeben eine erste Zeitkonstante. In der ersten Vergleichereinrichtung 21 werden der aktuelle Meßwert MW und der aktuelle Bezugswert RW1 miteinander verglichen, und bei Abweichung wird der Bezugswert RW1 in Richtung auf den aktuellen Meßwert MW um ein Inkrement geändert. Die Vergleichsvorgänge werden mit der Zählereinrichtung 23 gezählt, und bei Erreichen einer vorgegebenen Anzahl von Zählschritten wird der dann in dem ersten Zwischenregister 22 vorhandene Bezugswert RW1 der nachfolgenden zweiten Vergleichereinrichtung 24 zugeführt und dort mit einem in dem weiteren Zwischenregister 25 vorliegenden weiteren Referenzwert RW2 verglichen. Bei Abweichung zwischen dem Bezugswert RW1 und dem Referenzwert RW2 wird der in dem zweiten Zwischenregister 25 vorliegende Referenzwert um ein Inkrement in Richtung auf den Bezugswert RW1 geändert. In der Auswerteschaltung 20 wird die Differenz zwischen dem aktuellen Meßwert MW und dem Referenzwert RW2 überwacht und bei Überschreitung eines Schwellwertes ein Steuersignal ST zum Auslösen eines Wischvorgangs abgegeben. Eine solche Schwellwertüberschreitungtrittbeispielsweise bei Regen infolge der sich dadurch verringernden Amplitude des Sensorsignals S auf.

Der vorgebbare Zählzyklus, nach dem das erste Zwischenregister 22 den Bezugswert RW1 weitergibt, beträgt ein Vielfaches der ersten Zeitkonstante, beispielsweise das 256-fache. Bei einer ersten Zeitkonstante von 5 ms ergibt sich daraus eine Zeitkonstante für die weitere Einstellstufe von 1,28 s. Es sind aber auch kürzere oder längere Zählzyklen einstellbar, wobei zum Vergrößeren der Zeitkonstante der nachfolgenden weiteren Einstellstufe die Übernahme des ersten Referenzwerts RW1 nicht nach jedem, sondern beispielsweise nach jedem zweiten, dritten oder vierten Zyklus oder weiteren Zyklen in die weitere Einstellstufe übernommen wird. Mit der Übernahme nach vier Zählzyklen läßt sich beispielsweise eine weitere Zeitkonstante von 5,12 s erreichen.

Es ist sinnvoll, zwei oder mehr unterschiedliche Zeitkonstanten zu wählen, eine kleine für positive Verläufe des Sensorsignals S (z.B. abtrocknende Schlieren) und eine große Zeitkonstante für negative Verläufe des Sensorsignals S (z.B. Zuwachsen der Scheibe durch Nieselregen). Innerhalb der negativen Signaländerung ist es günstig, in der ersten Minute nach dem Start eine kürzere Zeitkonstante, z.B. 1,28 s und danach eine längere Zeitkonstante, z.B. 5,12 s pro Inkrement zu wählen. Bei der positiven Änderung des Sensorsignals S eignet sich z.B. eine kleine Zeitkonstante von 5 ms pro Inkrement, so daß der Bezugswert als Referenzwert RW1 am Ausgang der ersten Einstellstufe zur Differenzbildung mit dem aktuellen Meßwert MW herangezogen werden kann.

Der Differenz-Schwellwert zum Auslösen eines Wischbetriebs ist vorteilhafterweise nicht konstant, sondern abhängig von dem absoluten Pegel des Referenzwerts, um eine gleichmäßige Empfindlichkeit zu erhalten, die in Grenzen unabhängig vom absoluten Pegel ist. Der Schwellwert beträgt z.B. 1/16 des Referenzwerts, wenn dieser größer als 100 Inkremente ist, sonst 6 Inkremente.

Um auf sehr feinen Regen, beispielsweise Nebel, reagieren zu können, ist in der Auswerteeinrichtung 20 ein zweiter Pfad eingerichtet, der z.B. sechs Sekunden nach Erreichen der Parklage des Wischers aktiv wird und nur auf kleine, langfristige Signaleinbrüche reagiert.

Der Startwert zum Bilden des Referenzwerts nach Figur 2 ist z.B. der Mittelwert der ersten vier Meßwerte.

Mit der beschriebenen Vorrichtung können auch sehr geringe Niederschläge erkannt werden.

## Patentansprüche

1. Vorrichtung zum Betreiben eines Scheibenwischers mit einer Sensoreinrichtung zum Erfassen des Benetzungszustands einer Scheibe, einer das Sensorsignal aufnehmenden Auswerteeinrichtung, in der eine Einstelleinrichtung zum Erzeugen und eine Einstellstufe zum Nachführen eines Referenzwerts vorgesehen sind, und einer Austeuereinheit für den Scheibenwischer, die von der Auswerteeinrichtung zum Erzeugen eines Wischvorganges angesteuert wird, wenn sich zwischen dem Referenzwert und einem in Bruchteilen einer Sekunde aufgenommenen aktuellen Meßwert eine vorgegebene Abweichung ergibt, dadurch gekennzeichnet, daß der Wischvorgang erzeugt wird, wenn eine Differenz zwischen dem Referenzwert und dem aktuellen Meßwert (MW) einen Schwellwert überschreitet, daß die Zeitkonstante der Einstellstufe (24, 25) zum Nachführen des Referenzwerts wahrend des Wischbetriebs in der Größenordnung von einer Sekunde bis einigen Sekunden beträgt und daß der Referenzwert (RW2) schrittweise unter Berücksichtigung aller aufgenommenen aktuellen Meßwerte (MW) nachführbar ist.

2. Vorrichtung nach Anspruch 1,
dadurch gekennzeichnet,
daß die eine Zeitkonstante zwischen einer Sekunde und sechs Sekunden wählbar ist und
daß die aktuellen Meßwerte (MW) im Abstand von einigen Millisekunden aufgenommen werden.

3. Vorrichtung nach Anspruch 1 oder 2,
dadurch gekennzeichnet,
daß der Referenzwert (RW2) nach Ablauf der der einen Zeitkonstante entsprechenden Zeit um ein Inkrement in Richtung auf einen in einer vorangehenden ersten Einstellstufe (22) erzeugten Bezugswert (RW1) aktualisiert wird,
daß die vorangehende Einstellstufe (21,22) eine erste Zeitkonstante besitzt, die einen Bruchteil der einen Zeitkonstante beträgt, und
daß der Bezugswert (RW1) in der ersten Zeitkonstante entsprechenden Zeitabständen in Richtung auf den dann vorliegenden aktuellen Meßwert (MW) um ein Inkrement verändert wird.

4. Vorrichtung nach Anspruch 3,
dadurch gekennzeichnet,
daß die erste Einstellstufe (21,22) eine erste Vergleichereinrichtung (21) zum Vergleichen des aktuellen Meßwertes (MW) und des vorhandenen Bezugswerts (RW1) aufweist und
daß die eine Einstellstufe (24,25) eine zweite Vergleichereinrichtung besitzt zum Vergleichen des Bezugswerts (RW1), der nach Ablauf der der einen Zeitkonstanten entsprechenden Zeit vorliegt, und des dann anstehenden Referenzwerts (RW2) der einen Einstellstufe.

5. Vorrichtung nach Anspruch 3 oder Anspruch 4,
dadurch gekennzeichnet,
daß die vorangehende Einstellstufe (21,22) ein erstes Zwischenregister (22) und die eine Einstellstufe (24,25) ein zweites Zwischenregister (25) aufweist, in dem der Bezugswert (RW1) bzw. der Referenzwert (RW2) ablegbar sind.

6. Vorrichtung nach einem der Ansprüche 2 bis 5,
dadurch gekennzeichnet,
daß eine Zähleinrichtung (23) vorgesehen ist, mit der innerhalb eines vorgebbaren Zählzyklus die Aktualisierungsereignisse des Bezugswerts (RW1) gezählt werden, und
daß nach Ablauf des Zählzyklus oder nach Ablauf einer vorgebbaren Anzahl von Zählzyklen der dann in der ersten Einstellstufe (21,22) vorliegende Bezugswert (RW1) der einen Einstellstufe (24,25) zum Bilden des Referenzwerts (RW2) zugeführt wird.

7. Vorrichtung nach einem der Ansprüche 3 bis 6,
dadurch gekennzeichnet,
daß mittels der Auswerteeinrichtung (20) positive und negative Verläufe des Sensorsignals (S) unterscheidbar sind und
daß bei positivem Verlauf die Aktualisierung des Referenzwertes mit einer kleineren Zeitkonstante und bei negativem Verlauf mit einer größeren Zeitkonstante durchführbar ist.

8. Vorrichtung nach Anspruch 7,
dadurch gekennzeichnet,
daß die Zeitkonstante bei negativem Verlaufs des Sensorsignals (S) bis zu einigen Minuten nach dem Start des Wischbetriebs kürzer und danach länger gewählt ist.

9. Vorrichtung nach Anspruch 7 oder Anspruch 8,
dadurch gekennzeichnet,
daß die kleinere Zeitkonstante der ersten Zeitkonstante entspricht und daß der Bezugswert (RW1) als Referenzwert für die Bildung der Differenz zum eventuellen Auslösen des Wischvorgangs zugrunde gelegt wird.

10. Vorrichtung nach einem der vorhergehenden Ansprüche,
dadurch gekennzeichnet,
daß der Schwellwert zum Auslösen eines Wischvorganges einem vorgegebenen Bruchteil des Referenzwertes (RW2, RW1) entspricht, wenn der Referenzwert einen vorgegebenen Wert nicht überschreitet und
daß der Schwellenwert auf eine feste Größe eingestellt ist, wenn der Referenzwert den vorgegebenen Wert überschreitet.

11. Vorrichtung nach einem der vorhergehenden Ansprüche,
dadurch gekennzeichnet,
daß die Auswerteeinrichtung (20) einen weiteren Pfad aufweist, der aktivierbar, nachdem sich der Wischer mindestens einige Sekunden in der Parklage befindet und mit dem ein Signal auslösbar ist, wenn ein kleiner langfristiger Einbruch des Sensorsignals (S) festgestellt ist.

## Claims

1. Device for operating a windscreen wiper, with a sensor means for recording the state of wetting of a windscreen, with an evaluation means which receives the sensor signal and in which are provided a setting means for generating a reference value and a setting stage for correcting the said reference value, and with an activation unit for the windscreen wiper, the said activation unit being activated by the evaluation means in order to generate a wiping operation when a predetermined deviation occurs between the reference value and a current measured value received in fractions of a second, characterized in that the wiping operation is generated when a difference between the reference value and the current measured value (MW) exceeds a threshold value, in that the time constant of the setting stage (24, 25) for correcting the reference value during the wiping mode is of the order of magnitude of one second to a few seconds, and in that the reference value (RW2) can be corrected in steps by taking into account all the current measured values (MW) received.

2. Device according to Claim 1, characterized in that the one time constant can be selected between one second and six seconds, and in that the current measured values (MW) are received at an interval of a few milliseconds.

3. Device according to Claim 1 or 2, characterized in that, after the time corresponding to the one time constant has elapsed, the reference value (RW2) is updated by one increment in the direction of a reference value (RW1) generated in a preceding first setting stage (22), in that the preceding setting stage (21, 22) has a first time constant which is a fraction of the one time constant, and in that the reference value (RW1) is changed by one increment, at the time intervals corresponding to the first time constant, in the direction of the current measured value (MW) which is then available.

4. Device according to Claim 3, characterized in that the first setting stage (21, 22) has a first comparator means (21) for comparing the current measured value (MW) and the existing reference value (RW1), and in that the one setting stage (24, 25) has a second comparator means for comparing the reference value (RW1), which is available after the lapse of the time corresponding to the one time constant, and the then applicable reference value (RW2) of the one setting stage.

5. Device according to Claim 3 or Claim 4, characterized in that the preceding setting stage (21, 22) has a first intermediate register (22) and the one setting stage (24, 25) has a second intermediate register (25), in which the reference value (RW1) and the reference value (RW2) can be filed respectively.

6. Device according to one of Claims 2 to 5, characterized in that a counting means (23) is provided, by which the updating events of the reference value (RW1) are counted within a predeterminable counting cycle, and in that, after the lapse of the counting cycle or after the lapse of a predeterminable number of counting cycles, the reference value (RW1) then available in the first setting stage (21, 22) is fed to the one setting stage (24, 25) in order to form the reference value (RW2).

7. Device according to one of Claims 3 to 6, characterized in that positive and negative profiles of the sensor signal (S) can be differentiated by the evaluation means (20), and in that the updating of the reference value can be carried out with a lower time constant in the case of a positive profile and with a higher time constant in the case of a negative profile.

8. Device according to Claim 7, characterized in that, if the sensor signal (S) has a negative profile, the time constant is selected shorter up to a few minutes after the start of the wiping mode and longer thereafter.

9. Device according to Claim 7 or Claim 8, characterized in that the lower time constant corresponds to the first time constant, and in that the reference value (RW1) is taken as the basis for a reference value for forming the difference for the possible triggering of the wiping operation.

10. Device according to one of the preceding claims, characterized in that the threshold value for triggering a wiping operation corresponds to a predetermined fraction of the reference value (RW2, RW1) when the reference value does not exceed a predetermined value, and in that the threshold value is set at a fixed quantity when the reference value exceeds the predetermined value.

11. Device according to one of the preceding claims, characterized in that the evaluation means (20) has a further path which can be activated after the wiper is in the parking position for at least a few seconds and by means of which a signal can be triggered when a small long-term breakdown of the sensor signal (S) is established.

## Revendications

1. Dispositif pour actionner un essuie-glace, comportant :
- un dispositif de détection pour saisir l'état d'humidification d'une vitre,
- un dispositif d'exploitation recevant le signal de détection et comprenant un dispositif de réglage pour produire et un étage de réglage pour transmettre une valeur de référence,
- une unité de commande de l'essuie-glace, commandée par le dispositif d'exploitation de manière à provoquer une opération d'essuyage quand entre la valeur de référence et une valeur actuelle mesurée pendant des fractions d'une seconde, apparaît un écart prédéterminé,
caractérisé en ce que
l'essuyage a lieu quand une différence entre la valeur de référence et la valeur mesurée actuelle (MW) franchit une valeur de seuil, que la constante de temps de l'étage de réglage (24, 25) pour suivre la valeur de référence pendant l'essuyage atteint un ordre de grandeur d'une à quelques secondes et que la valeur de référence (RW2) peut être suivie pas à pas en tenant compte de toutes les valeurs actuelles mesurées (MW) reçues.

2. Dispositif selon la revendication 1,
caractérisé en ce qu'
- on peut choisir une constante de temps entre une et sept secondes,
- les valeurs actuelles mesurées (MW) sont reçues à des intervalles de temps de quelques millisecondes.

3. Dispositif selon la revendication 1 ou 2,
caractérisé en ce que
- la valeur de référence (RW2), après écoulement d'un temps correspondant à une constante de temps, est actualisée d'un incrément en direction d'une valeur de référence (RW1) établie dans un premier étage de réglage (22) précédent l'étage de réglage précédent (21, 22) possède une première constante de temps dont la valeur est une fraction d'une constante de temps
- la valeur de référence (RW1) à des intervalles de temps correspondant à la première constante de temps, est modifiée d'un incrément en direction de la valeur mesurée (MW) présente alors.

4. Dispositif selon la revendication 3,
caractérisé en ce que
- le premier étage de réglage (21, 22) comprend un premier dispositif de comparaison (21) pour comparer la valeur actuelle mesurée (MW) à la valeur de référence (RW1) présente,
- un étage de réglage (24, 25) possède un second dispositif de comparaison pour comparer la valeur de référence (RW1) qui se présente après écoulement du temps correspondant à une constante de temps, à la valeur de référence (RW2) présente alors dans cet étage.

5. Dispositif selon la revendication 3 ou 4,
caractérisé en ce que
l'étage de réglage (21, 22) situé en avant comprend un premier enregistreur intermédiaire (22) et l'étage de réglage (24, 25) comprend un second enregistreur intermédiaire (25) dans lequel peuvent être transférées la valeur de référence (RW1) et la valeur de référence (RW2).

6. Dispositif selon les revendications 2 à 5,
caractérisé en ce qu'
- il est prévu un dispositif de comptage (23) qui compte les opérations d'actualisation de la valeur de référence (RW1), effectuées à l'intérieur d'un cycle de comptage prédéterminé,
- à la fin du cycle de comptage ou après un nombre prédéterminé de cycles de comptage, la valeur de référence (RW1) qui est alors présente dans le premier étage de réglage (21, 22) est transmise à un étage de réglage (24, 25) pour former la valeur de référence (RW2).

7. Dispositif selon les revendications 3 à 6,
caractérisé en ce que
- le dispositif d'exploitation (20) peut distinguer les évolutions positives ou négatives du signal de détection (S),
- en cas d'évolution positive, l'actualisation de la valeur de référence peut être effectuée avec une constante de temps assez petite, et avec une constante de temps assez grande en cas d'évolution négative.

8. Dispositif selon la revendication 7,
caractérisé en ce que
la constante de temps, en cas d'évolution négative du signal de détection (S) peut être choisie assez courte pendant quelques minutes après le démarrage, et plus longue ensuite.

9. Dispositif selon la revendication 7 ou 8,
caractérisé en ce que
la plus petite constante de temps correspond à la première constante de temps et la valeur de référence (RW1) est utilisée comme valeur de référence pour établir la différence conduisant éventuellement au déclenchement de l'opération d'essuyage.

10. Dispositif selon une des revendications précédentes,
caractérisé en ce que
la valeur de seuil servant à déclencher une opération d'essuyage correspond à une fraction donnée de la valeur de référence (RW2, RW1) si cette dernière ne dépasse pas une valeur donnée, tandis que la valeur de seuil est réglée à un niveau fixe, si la valeur de référence dépasse la valeur donnée.

11. Dispositif selon une des revendications précédentes,
caractérisé en ce que
le dispositif d'évaluation (20) comprend un autre parcours qui peut être activé après que l'essuie-glace ait occupé au moins pendant quelques secondes sa position de repos et qui peut déclencher un signal si une petite plongée du signal de détection (S) apparaît à long terme.
